# FASCICULE DE BREVET EUROPEEN

(11) **EP 0 615 614 B1**
(45) Date de publication et mention de la délivrance du brevet: **13.09.1995**
(21) Numéro de dépôt: 93902288.5
(22) Date de dépôt: 03.12.1992
(51) Int. Cl.: G01K 11/06

(54) **Controleur de température pour produits réfrigérés, utilisant la solidification et la fusion de corps liquides à température ambiante**
Temperaturüberwachungsgerät für gekühlte Produkte, unter Anwendung der Verfestigung und des Schmelzens eines bei Umgebungstemperatur flüssigen Mediums
Temperature indicator for refrigerated procucts, using the solidification and fusion of liquid bodies at room temperature

(30) Priorité: 05.12.1991 FR 9115395
(43) Date de publication de la demande: 21.09.1994
(73) Titulaire: LOUSTAUNAU, Albert, F-83000 Draguignan (FR)
(72) Inventeur: LOUSTAUNAU, Albert, F-83000 Draguignan (FR)
(74) Mandataire: Roman, Michel
(86) Numéro de dépôt international: FR9201138
(87) Numéro de publication internationale: WO9311411

(56) Documents cités:
- EP-A- 0 391 782
- FR-A- 2 626 668
- FR-A- 2 632 405

## Description

La présente invention a pour objet un contrôleur de température pour produits réfrigérés, utilisant la solidification et la fusion de corps liquides à température ambiante.

Il est destiné à contrôler le maintien d'une température soit entre deux limites, soit en deçà ou au-delà d'une température critique, et est en particulier conçu pour vérifier que des produits frais ou congelés n'ont pas subi d'altération à l'insu des utilisateurs, par suite d'une panne de courant ou d'une défaillance des circuits de refroidissement de l'enceinte réfrigérée de conservation ou de transport. Il concerne principalement les produits alimentaires, mais peut être utilisé dans tous les cas où une température de stockage doit être maintenue, par exemple pour des produits pharmaceutiques, ou des produits instables comme les peintures, colles, etc.

Les produits alimentaires congelés ou surgelés doivent être conservés à une température restant en permanence au-dessous d'une température déterminée. Pour les produits frais, le transport et la conservation doivent avoir lieu à une température comprise entre zéro et sept degrés ou moins, ces valeurs ne devant être dépassées ni vers le haut, ni vers le bas. Or une importante variation de température peut se produire de manière fortuite, sans que le distributeur du produit, ni le consommateur n'en soient avertis, dans le cas où la température se trouve à nouveau à une valeur correcte lors de la vérification. Le problème est d'autant plus difficile à résoudre que les produits sont souvent présentés dans des vitrines, et accessibles à l'acheteur qui peut ainsi les manipuler, les sortir de l'enceinte réfrigérée et les remettre après les avoir examinés.

De même, durant leur transport, les produits passent à plusieurs reprises un temps difficilement contrôlable hors des enceintes froides de conservation ou de transport.

Ces considérations indiquent bien qu'un contrôle de la température limité aux enceintes froides de transport, stockage ou de présentation est insuffisant. Pour que ce contrôle soit efficace il faut que le franchissement des limites de température autorisée à l'intérieur de tout emballage individuel apparaisse par un signe facilement visible, qui persiste après que la température se trouve à nouveau dans les limites autorisées. A ce jour, les dispositifs permettant de détecter une telle variation de température sont soit des systèmes électroniques d'alarme, d'un coût élevé et destinés uniquement aux installations importantes, soit des témoins apposés sur l'emballage des produits, changeant de couleur lorsque la température s'élève et surtout influencés par la température de l'enceinte.

Ces témoins sont à l'heure actuelle très peu répandus et il n'existe à notre connaissance aucun moyen efficace et peu onéreux permettant de détecter une variation dangereuse de la température, en particulier entre deux valeurs.

Un certain nombre de brevets, et en particuler les brevets FR-A-2 664 052 et FR-A-2 665 957, du même inventeur, ou FR-A-2 632 405 proposent l'utilisation de témoins constitués de capsules contenant une solution aqueuse dont la congélation ou la décongélation provoque un phénomène visible irréversible permettant de constater qu'une température critique a été dépassée, vers le haut ou vers le bas. Ces dispositifs, s'ils résolvent le problème du coût de fabrication, souffrent d'un grave inconvénient interdisant pratiquement leur développement: ils doivent être conditionnés ou "amorcés" avant ou après la congélation du produit à conserver, ce qui non seulement nécessite des manipulations difficiles à envisager pour une production en grande quantité, mais limite la fiabilité du contrôle, en particulier dans le cas où cet amorçage est réversible.

Le dispositif suivant la présente invention se propose de remédier à ces inconvenients. En effet, il permet, pour un prix de revient très bas, de détecter de manière totalement fiable une élévation ou une baisse de la température du produit lui-même au-delà de limites haute ou basse, même si ladite température est revenue à une valeur correcte au moment du contrôle, et ceci avec un amorçage du contrôleur automatique, vérifiable visuellement et irréversible.

Il est constitué par la combinaison d'une enveloppe entièrement ou partiellement transparente dans laquelle se trouve une capsule remplie d'une solution aqueuse liquide à température ambiante, et comportant une amorce de rupture périphérique provoquant sa séparation en deux parties sous l'effet de la solidification de la solution, ladite capsule renfermant un ressort comprimé disposé de telle manière que, lorsqu'elle est brisée suivant l'amorce de rupture, ledit ressort reste comprimé tant que la solution est à l'état solide, et écarte nettement les deux parties de la capsule l'une de l'autre, de façon visible et irréversible, en cas de liquéfaction de la solution.

Sur les dessins schématiques annexés, donnés à titre d'exemples non limitatifs de formes de réalisation de l'objet de l'invention:
la figure 1 représente en coupe axiale le dispositif tel qu'il est stocké avant utilisation,
la figure 2 montre dans les mêmes conditions le dispositif amorcé, la baisse de température due à la congélation ayant solidifié la solution et provoqué la séparation de la capsule en deux parties,
la figure 3 représente le contrôleur après une élévation de température ayant provoqué la fusion de la solution, libérant ainsi le ressort qui écarte de façon très visible les deux parties de la capsule,
sur la figure 4 l'enveloppe du contrôleur est partiellement opaque, de manière à ne laisser apparaître la capsule que en cas de fusion de la solution, et la figure 5 montre une variante dans laquelle un témoin de température basse est associé au contrôleur, l'ensemble étant destiné à la surveillance des produits frais non congelés.

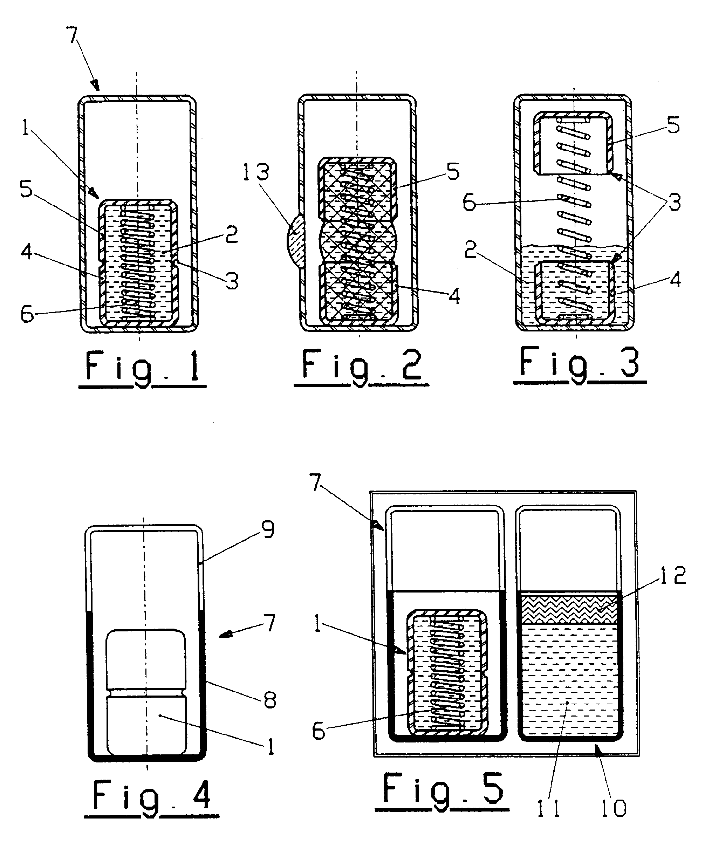

Le dispositif, figures 1 à 4, est un témoin de température constitué d'une capsule 1 entièrement remplie d'une solution 2, préférentiellement aqueuse, liquide à température ambiante de stockage et augmentant de volume lors de sa solidification, ladite solution étant mélangée à un ou des additifs fixant son point de fusion à une valeur fonction de la température critique à surveiller.

La capsule 1 est pourvue d'une amorce de rupture 3 périphérique permettant sa séparation en deux parties prédéfinies 4, 5 lorsque le volume de la solution 2 qu'elle contient augmente sous l'effet de la solidification provoquée par l'abaissement de température ayant lieu lors de la réfrigération ou de la congélation du produit à surveiller.

Cette rupture de la capsule, éventuellement mise en évidence par la coloration de la solution 2, permet de vérifier que la température de réfrigération requise a bien été atteinte, et constitue un amorçage automatique et irréversible du processus de surveillance. En effet, le contrôleur peut être stocké aussi longtemps que nécessaire à température ambiante, et ne demande aucune manipulation pour être mis en oeuvre, ce qui permet de l'intégrer à l'emballage des produits réfrigérés lors de sa fabrication.

Un ressort ou élément élastique 6 comprimé est enfermé dans la capsule 1, et disposé de manière à ce que lorsqu'elle est brisée suivant l'amorce de rupture 3, celui-ci reste comprimé tant que la solution 2 est à l'état solide, mais se détende de façon visible et irréversible en cas de liquéfaction de ladite solution. Cette détente peut avantageusement être utilisée pour écarter nettement l'une de l'autre les deux parties prédéfinies 4, 5 de la capsule, ce qui permet de rendre le phénomène plus visible (Figure 3).

Afin d'éviter que la solution 2 ne se répande, la capsule 1 est contenue dans une enveloppe 7 totalement ou partiellement transparente, solidarisée avec le produit à vérifier, avec son emballage ou avec l'enceinte réfrigérée le contenant, empêchant la manipulation du témoin de température tout en permettant son observation.

Sur la figure 4, une des partie prédéfinies 4 est solidaire de l'enveloppe 7, qui comporte une partie opaque 8 dissimulant la capsule tant que la solution 2 ne s'est pas liquéfiée, et une partie transparente 9 permettant de voir la seconde partie prédéfinie 5 lorsque cette dernière est écartée par l'élément élastique 6 après fusion de la solution 2.

L'enveloppe 7 peut être équipée d'une loupe 13 située au niveau de l'amorce de rupture 3 et permettant de vérifier que l'amorçage du processus s'est bien produit et que par conséquent la température de réfrigération a bien été atteinte.

Pour la surveillance des produits frais, on peut associer à la capsule 1 un témoin de température basse 10 contenant un liquide 11 se solidifiant en provoquant un phénomène visible et irréversible lorsque la température descend au-dessous d'une température basse critique, généralement voisine de 0° C (Figure 5). Dans ce cas, la température de solidification de la solution 2 contenue dans la capsule 1 est bien sûr supérieure à celle du liquide 11.

Le phénomène visible irréversible peut consister dans le déplacement d'un repère 12 provoqué par l'augmentation de volume du liquide 11, ce déplacement étant avantageusement amplifié par un ressort maintenu comprimé et libéré par la solidification du liquide 11 grâce à un système d'échappement ou de gâchette.

Le déplacement des divers éléments du contrôleur provoqué par le franchissement d'une température critique peut être mis à profit pour modifier l'état d'un contacteur électrique commandant une alarme sonore ou visuelle ou l'enregistrement de l'évènement.

Le positionnement des divers éléments constitutifs donne à l'objet de l'invention un maximum d'effets utiles qui n'avaient pas été, à ce jour, obtenus par des dispositifs similaires.

## Revendications

1. Contrôleur de température pour produits réfrigérés, utilisant la solidification et la fusion de corps liquides à température ambiante, destiné à contrôler le maintien d'une température soit entre deux limites, soit en deçà ou au-delà d'une température critique, principalement pour la surveillance des produits alimentaires réfrigérés, mais pouvant être utilisé dans tous les cas où une température de stockage doit être maintenue, par exemple pour des produits pharmaceutiques, conditionné de telle sorte que le changement d'état du liquide, solidification et fusion entraînée par le franchissement de cette température critique, provoque une modification irréversible et visible, contrôleur comprenant
un témoin de température constitué d'une capsule (1) entièrement remplie d'une solution (2) liquide à température ambiante de stockage et augmentant de volume lors de sa solidification, caractérisé en ce que ladite capsule (1) comportant une amorce de rupture (3) périphérique provoquant sa séparation en deux parties prédéfinies (4, 5) sous l'effet de la solidification de la solution (2), ladite capsule (1) renfermant un élément élastique (6) tel que ressort, comprimé et disposé de manière à ce que lorsqu'elle est brisée suivant l'amorce de rupture (3), l'élément élastique reste comprimé tant que la solution est à l'état solide, et se détende de façon visible et irréversible en cas de liquéfaction de ladite solution, cette dernière étant mélangée à un ou des additifs fixant son point de fusion à une valeur fonction de la température critique à surveiller.

2. Contrôleur de température selon la revendication 1, se caractérisant par le fait que l'élément élastique (6) en se détendant sous l'effet de la liquéfaction de la solution (2), écarte nettement l'une de l'autre les deux parties prédéfinies (4, 5) de la capsule (1), de façon visible et irréversible.

3. Contrôleur de température selon l'une quelconque des revendications précédentes, se caractérisant par le fait que la capsule (1) est enfermée dans une enveloppe externe (7) fermée, partiellement ou totalement transparente, solidarisée avec le produit à vérifier, avec son emballage ou avec l'enceinte réfrigérée le contenant, empêchant la manipulation du témoin de température tout en permettant son observation.

4. Contrôleur de température selon la revendication 3, se caractérisant par le fait qu'une des partie prédéfinies (4) de la capsule (1) est solidaire de l'enveloppe (7), qui comporte une partie opaque (8) dissimulant la capsule tant que la solution (2) ne s'est pas liquéfiée, et une partie transparente (9) permettant de voir la seconde partie prédéfinie (5) lorsque cette dernière est écartée par l'élément élastique (6) après fusion de la solution (2).

5. Contrôleur de température selon la revendication 4, se caractérisant par le fait que l'enveloppe (7) est équipée d'une loupe (13) située au niveau de l'amorce de rupture (3) pour permettre la vérification de l'amorçage du processus.

6. Contrôleur de température selon l'une quelconque des revendications précédentes, se caractérisant par le fait qu'un témoin de température basse (10), contenant un liquide (11) se solidifiant en provoquant un phénomène visible et irréversible lorsque la température descend au-dessous d'une température basse critique, est associé à la capsule (1), la température de solidification de la solution (2) contenue dans celle-ci étant supérieure à celle du liquide (11).

7. Contrôleur de température selon la revendication 6, se caractérisant par le fait que le liquide (11) augmente de volume en se solidifiant en provoquant le déplacement irréversible d'un repère (12).

8. Contrôleur de température selon la revendication 7, se caractérisant par le fait que le déplacement irréversible du repère (12) est amplifié par un ressort maintenu comprimé grâce à une gâchette ou un système d'échappement et libéré par la solidification du liquide (11).

9. Contrôleur de température selon l'une quelconque des revendications précédentes, se caractérisant par le fait que le déplacement des divers éléments du contrôleur provoqué par le franchissement d'une température critique modifie l'état d'un contacteur électrique commandant une alarme ou l'enregistrement de l'évènement.

## Patentansprüche

1. Temperatur-Kontrollgerät für gekühlte Produkte unter Nutzung der Verfestigung und des Schmelzens von bei Umgebungstemperatur flüssigen Körpern dazu bestimmt, die Aufrechterhaltung einer Temperatur entweder zwischen zwei Grenzwerten oder unterhalb bzw. oberhalb einer kritischen Temperatur hauptsächlich für die Überwachen von gekühlten Lebensmitteln, welches jedoch auch in allen Fällen, bei denen eine Lagertemperatur gehalten werden soll, benutzt werden kann, zum Beispiel für pharmazeutische Produkte, die so konditioniert sind, daß die Zustandsänderung der Flüssigkeit, Verfestigung oder Schmelzen, verursacht durch Überschreiten dieser kritischen Temperatur eine unumkehrbare und sichtbare Änderung mit sich bringt; Kontrollgerät ausgerüstet mit einer Temperaturanzeige bestehend aus einer Kapsel (1) völlig gefüllt mit einer bei Lagerungstemperatur flüssigen Lösung (2), welche sich bei Verfestigung ausdehnt, dadurch gekennzeichnet, daß die besagte Kapsel (1) mit einem peripherischen Anriß (3) versehen ist, welche unter der Wirkung der Verfestigung der Lösung (2) eine Trennung in zwei vordefinierte Teile (4, 5) verursacht, wobei die besagte Kapsel (1) einen elastischen Körper (6) wie eine komprimierte und so angeordnete Feder enthält, daß wenn die Kapsel entsprechend dem Anriß (3) gebrochen wird, der elastische Körper komprimiert bleibt solange die Lösung in festem Zustand ist und sich auf sichtbare und unumkehrbare Weise bei der Verflüssigung der besagten Lösung entspannt, wobei diese letztere mit einem oder mehreren Zusätzen vermischt ist, welche ihren Schmelzpunkt auf einen Wert entsprechend der zu überwachenden kritischen Temperatur festlegen.

2. Temperatur-Kontrollgerät gemäß Anspruch 1 dadurch gekennzeichnet, daß der elastische Körper (6) bei seiner Entspannung unter der Wirkung der Verflüssigung der Lösung (2) deutlich das eine von dem anderen der beiden vordefinierten Teile (4, 5) der Kapsel (1) auf sichtbare und unumkehrbare Weise spreizt.

3. Temperatur-Kontrollgerät gemäß irgendeinem der vorhergehenden Ansprüche, dadurch gekennzeichnet, daß die Kapsel (1) in einer äußeren geschlossenen, teilweise oder völlig durchsichtigen Hülle (7) eingeschlossen ist, welche mit dem zu überwachenden Produkt, seiner Verpackung oder dem es enthaltenden Kühlraum auf eine Weise verbunden ist, die eine Handhabung der Temperaturanzeige und dabei ihre Beobachtung zuläßt.

4. Temperatur-Kontrollgerät gemäß Anspruch 3, dadurch gekennzeichnet, daß eines der vordefinierten Teile (4) der Kapsel (1) fest mit der Hülle (7) verbunden ist, welche einen opaken Teil (8) besitzt, der die Kapsel abdeckt solange die Lösung (2) sich nicht verflüssigt hat, sowie einen transparenten Teil (9), der ermöglicht das zweite vordefinierte Teil (5) zu sehen, wenn dieses durch den elastischen Körper (6) nach dem Schmelzen der Lösung (2) gespreizt wird.

5. Temperatur-Kontrollgerät gemäß Anspruch 4, dadurch gekennzeichnet, daß die Hülle (7) mit einer Lupe (13) ausgerüstet ist, die sich in Höhe des Anrisses (3) befindet, um die Überwachung des Beginns des Prozesses zu ermöglichen.

6. Temperatur-Kontrollgerät gemäß irgendeinem der vorhergehenden Ansprüche, dadurch gekennzeichnet, daß eine Anzeige für niedrige Temperatur (10) mit einer Flüssigkeit (11), die sich verfestigt und dabei eine sichtbare und unumkehrbare Erscheinung bewirkt, wenn die Temperatur unter eine niedrige kritische Temperatur abfällt, mit der Kapsel (1) assoziiert ist, wobei die Verfestigungstemperatur der in der Kapsel enthaltenen Lösung (2) höher als die der Flüssigkeit (11) ist.

7. Temperatur-Kontrollgerät gemäß Anspruch 6, dadurch gekennzeichnet, daß die Flüssigkeit (11) bei der Verfestigung ihr Volumen erhöht und damit eine unumkehrbare Verschiebung einer Bezugsmarke (12) bewirkt.

8. Temperatur-Kontrollgerät gemäß Anspruch 7, dadurch gekennzeichnet, daß die unumkehrbare Verschiebung der Bezugsmarke (12) durch eine Feder verstärkt wird, die mit Hilfe eines Drückers oder eines Hemmungssystems zusammengepreßt gehalten wird und durch die Verfestigung der Flüssigkeit (11) befreit wird.

9. Temperatur-Kontrollgerät gemäß irgendeinem der vorhergehenden Ansprüche, dadurch gekennzeichnet, daß die durch die Überschreitung einer kritischen Temperatur verursachte Verschiebung der verschiedenen Elemente des Kontrollgerätes, den Zustand eines elektrischen Schalters ändert, einen Alarm oder die Aufzeichnung des Ereignisses auslöst.

## Claims

1. Temperature controller for refrigerated products using the principle of the solidification and fusion of liquid bodies at ambient temperature to control a temperature either between two limits or below or above a threshold temperature, mainly in order to monitor refrigerated food products but also for use in all cases where a storage temperature must be maintained, for example for pharmaceutical products conditions so that the change in the state of the liquid by solidification and fusion, caused by a critical temperature being passed, leads to an irreversible and visible modification,
the controller comprises a temperature indicator consisting of a capsule (1) entirely filled with a liquid (2) at the ambient storage temperature which increases in volume on solidification, characterized in that the said capsule (1) comprising a peripheral breakage fuse (3) causing separation into two predefined parts (4, 5) under the effect of solution solidification (2), the said capsule (1) enclosing an elastic element (6) such as a spring, compressed and arranged so that when it is broken as a result of the breakage fuse (3), the elastic element remains compressed so long as the solution is solid and expands visible and irreversibly when the said solution liquefies, this latter being mixed with one or several additives so that its melting point is at a value related to the critical temperature to be monitored.

2. Temperature control device as per claim 1 characterized in that, by the relaxation of the flexible element (6) due to liquefying of the solution (2), the two predefined parts (4, 5) of the capsule (1) are visibly and irreversibly separated one from the other.

3. Temperature control device as per any one of the aforesaid claims characterized in that the capsule (1) is enclosed in an external closed envelope (7), which is partly or totally transparent, integral with the product to be checked, with its packaging or with its refrigerated enclosure, preventing manipulation of the temperature indicator but allowing its observation.

4. Temperature control device as per claim 3 characterized in that one of the predefined parts (4) of the capsule (1) forms an integral part of the envelope (7) which comprises an opaque part (8) to hide the capsule so long as the solution (2) has not liquefied and a transparent part (9) which enables the second predefined part (5) to be seen when this is moved apart by the flexible element (6) after the solution has melted (2).

5. Temperature control device as per claim 4 characterized in that the envelope (7) is equipped with a magnifying glass (13) positioned at the breakage fuse (3) to allow it to be checked.

6. Temperature control device as per any one of the aforesaid claims characterized in that a temperature indicator containing a liquid (11) which solidifies by causing a visible and irreversible phenomenon when the temperature falls below a critical low temperature, is associated with the capsule (1), the temperature for solidification of the solution (2) contained in this being greater than that of the liquid (11).

7. Temperature controller as per claim 6 characterized in that the liquid (11) increases in volume by solidifying and causing irreversible movement of an indicator (12).

8. Temperature controller according to claim 7 characterized in that the irreversible movement of the indicator (12) is amplified by a spring which is maintained compressed by a trigger or an escape mechanism and freed by the solidification of the liquid (11).

9. Temperature controller according to any one of the aforesaid claims characterized in that movement of the various controller elements caused by the critical temperature threshold being passed changes the state of an electrical switch controlling an alarm or the recording of the event.
